# EUROPÄISCHE PATENTSCHRIFT

(11) **EP 2 539 619 B1**
(45) Veröffentlichungstag und Bekanntmachung des Hinweises auf die Patenterteilung: **07.10.2015**
(21) Anmeldenummer: 11705445.2
(22) Anmeldetag: 11.02.2011
(51) Int. Cl.: F16L 23/028

(54) **VERBINDUNGSVORRICHTUNG ZUM VERBINDEN EINES FLEXIBLEN GEBINDES MIT EINEM FLANSCH ODER EINEM ANSCHLUSSRING**
CONNECTING DEVICE FOR CONNECTING A FLEXIBLE CONTAINER TO A FLANGE OR A CONNECTING RING
DISPOSITIF DE LIAISON POUR RELIER UN RÉCIPIENT FLEXIBLE À UNE BRIDE OU BAGUE DE RACCORDEMENT

(30) Priorität: 24.02.2010 DE 102010009179
(43) Veröffentlichungstag der Anmeldung: 02.01.2013
(73) Patentinhaber: FLECOTEC AG, 79379 Müllheim (DE)
(72) Erfinder: UNTCH, Günter, 79410 Badenweiler (DE)
(74) Vertreter: Bartels & Partner
(86) Internationale Anmeldenummer: PCT/EP2011/000654
(87) Internationale Veröffentlichungsnummer: WO 2011/103965

(56) Entgegenhaltungen:
- EP-A1- 1 600 681
- WO-A1-2009/144359
- AU-A- 8 476 675
- FR-A1- 2 581 927
- FR-A1- 2 776 361
- US-A- 5 163 712

## Beschreibung

Die Erfindung betrifft eine Verbindungsvorrichtung mit einem flexiblen Gebinde zum Verbinden des Gebindes mit einem Flansch oder einem Anschlussring.

Bekannte Vorrichtungen, wie beispielsweise aus EP 1 656 311 B1, US 5 163 712 A oder AU 84766 75 A bekannt, bestehen aus mehreren Elementen, die aufwändig miteinander zu kombinieren sind, um ein flexibles Gebinde möglichst umweltdicht beispielsweise mit einem Flansch oder einem anderen Gebinde zu verbinden.

Gemäß EP 1 656 311 B1 wird das flexible Gebinde zwischen wenigstens zwei Elementen eingespannt. Das Einspannen wird durch Hilfsmittel unterstützt, beispielsweise durch einen umlaufenden Spannring, der die Elemente gemeinsam umgreift.

Das der Erfindung zugrunde liegende Problem besteht darin, die Verbindungsvorrichtung zum Verbinden eines flexiblen Gebindes mit einem Flansch oder einem Anschlussring mit möglichst wenigen Elementen auszugestalten, wobei die wenigen Elemente mehrere Funktionen vereinen und möglichst kostengünstig herstellbar sein sollen. Insbesondere soll eine umweltdichte Verbindung mit möglichst einfachen und wenigen in die Vorrichtung einzusetzenden Dichtelementen ausgeführt werden.

Das Problem wird erfindungsgemäß gelöst durch eine Verbindungsvorrichtung mit den Merkmalen des Patentanspruchs 1. Vorteilhafte Ausführungsformen sind in den Unteransprüchen angegeben.

Eine gattungsgemäße Verbindungsvorrichtung ist zum Verbinden eines flexiblen Gebindes mit einem Flansch oder einem Anschlussring geeignet.

Die erfindungsgemäße Verbindungsvorrichtung hat einen Außenring, der radial innen eine Innenfläche und dem Flansch oder dem Anschlussring zugewandt eine Anschlussseite aufweist, und einen Innenring, der radial außen eine Außenfläche aufweist. Um die Außenfläche ist ein Endabschnitt des Gebindes umgestülpt. Die Außenfläche und die Innenfläche sind wenigstens teilweise kongruent zueinander ausgebildet, sodass der Endabschnitt zum Erreichen einer Verbindungsposition zwischen dem Außenring und dem Innenring einklemmbar ist. Der Innenring ist von der Anschlussseite her in den Außenring einsetzbar und in der Verbindungsposition der Anschlussseite abgewandt in dem Außenring abgestützt.

Der Außenring weist radial innen eine vollständig umlaufende, nach radial innen offene Aufnahmenut mit einem runden Querschnitt auf. Der Innenring ist einteilig und in einem Bereich der Außenfläche mit einem runden Querschnitt ausgebildet. Außerdem besteht der Innenring aus einem einzigen derart flexiblen Material, dass der Innenring zum Erreichen der Verbindungsposition in die Aufnahmenut einschnappen kann.

Beispielsweise ist bei der vorgeschlagenen Ausgestaltung als Anschlussring ein weiterer mit dem Außenring identischer Ring mit dem Außenring verbindbar. Dabei sind keine weiteren Elemente erforderlich, die etwa zwischen dem Außenring und dem Anschlussring anzuordnen wären. Der Einschluss des Gebindes ist lediglich mit dem Innenring und dem Außenring vollständig gewährleistet, sodass eine derartige direkte Verbindung mit dem Anschlussring ermöglicht ist. Dabei werden die Funktionen des sicheren Haltens des Gebindes und der umweltdichten Abdichtung durch die miteinander wirkenden beiden Ringe übernommen.

Das flexible Material gewährleistet eine ausreichende Klemmung des Innenrings in den Außenring. Die Flexibilität wird zum Einen beim Einsetzen benötigt. Der Innenring muss kleiner werden, um über einen Innendurchmesser des Außenrings auf der Anschlussseite hinweg in die Aufnahmenut eingesetzt werden zu können. Bevorzugt ist darüber hinaus die Flexibilität zum Abdichten der Ringe gegen das Gebinde ausgenutzt. Dazu ist in bevorzugten Ausführungsformen ein radial äußerster Außendurchmesser des Innenrings größer als ein radial äußerster Innendurchmesser des Außenrings ausgebildet. Im Falle von Konturen in der Nut kann auch eine von mehreren Erhebungen im Querschnitt der Nut bzw. des Innenrings das Übermaß aufweisen.

Der Innenring ist dabei ohne weitere Hilfsmittel mit dem beschriebenen Übermaß in den Innenring einsetzbar. Ein um den Innenring umgeschlagenes flexibles Gebinde wird ohne weitere Hilfsmittel über einen kreisbogenförmigen Abschnitt der Außenfläche zwischen den Ringen eingequetscht, sodass es zu einer umweltdichten Verbindung zwischen den Ringen und dem flexiblen Gebinde kommt.

Alternativ oder zusätzlich zu der Lösung mit dem Übermaß kann einer der Ringe eine wenigstens teilweise umlaufende Überhöhung aufweisen, sodass der entsprechende Ring in Durchflussrichtung gesehen nicht auf einer Höhe mit dem anderen Ring ohne Überhöhung abschließt. Gegen einen gemeinsamen Flansch gespannt verschieben sich in Folge derart ausgebildete Ringe in Durchflussrichtung gegeneinander, sodass die gewünschte Dichtung durch erhöhten Druck des Ringes mit der Überhöhung gegenüber dem gemeinsamen Flansch verbessert wird.

Die vorgeschlagene Verbindungsvorrichtung ist leicht zu montieren und zu demontieren, unter Ausschluss von jeglicher Fehlmontagemöglichkeit. Die Ringe passen ohne Drehorientierung nur in einer vorgesehenen Ausrichtung zueinander zusammen. Für den Innenring ist dabei keine Lageorientierung notwendig.

Es besteht eine kostengünstige Möglichkeit bei dem Innenring auf ein Normteil zurückzugreifen. Es kann vorteilhaft sein, im Querschnitt gesehen, in dem Bereich der Außenfläche eine Kontur vorzusehen, ggf. auch entsprechend in der Aufnahmenut.

Bei vorteilhaften Ausführungsformen ist auf eine Vermeidung von scharfen Kanten an den Bauteilen, die mit dem Gebinde in Kontakt stehen, geachtet, um Verletzungen an dem Gebinde zu verhindern.

Bei einer weiteren vorteilhaften Ausführungsform besteht der Außenring aus einem einzigen Teil.

In einer weiteren vorteilhaften Ausführungsform ist der Innenring in einer Schnappposition in axialer Richtung beidseitig in der Aufnahmenut abgestützt.

Bei einer weiteren vorteilhaften Ausführungsform ist der Außenring auf der Anschlussseite mit einem Innendurchmesser ausgebildet, der kleiner ist als der Außendurchmesser des Innenrings.

Bei einer weiteren vorteilhaften Ausführungsform ist die Aufnahmenut derart ausgebildet, dass sie bei Betrachtung gemäß einem Ziffernblatt einer Uhr den runden Querschnitt des Innenrings in der Schnappposition von etwa 7 bis 1 Uhr bzw. gegenüberliegend von 11 bis 5 Uhr umgreift.

Bei einer weiteren vorteilhaften Ausführungsform weist der Außenring und/oder der Innenring auf der jeweiligen Anschlussseite eine umlaufende Dichtlippe auf. Eine solche Erhebung übernimmt außerdem eine Zentrierungsfunktion gegenüber dem Flansch oder dem Anschlussring, unabhängig davon, ob eine Dichtfunktion von der Erhebung zu übernehmen ist oder nicht.

Bei einer weiteren vorteilhaften Ausführungsform weist der Außenring und/oder der Innenring in axialer Richtung dem Flansch zugewandt eine umlaufende Nut zur Aufnahme einer Dichtung auf.

Eine umweltdichte Abdichtung des Gebindes zum Flansch bzw. zum Anschlussring ist somit vorteilhaft über eine Verklemmung des Gebindes zwischen dem Innenring bzw. dem Außenring oder beiden Ringen und dem Flansch bzw. dem Anschlussring gewährleistet, wobei die Dichtung oder die Dichtlippe bevorzugt aus einem harten, jedoch elastischen Kunststoff besteht, insbesondere mit einer Härte von ca. 80 Shore A.

Die Erfindung wird nachfolgend anhand von Figuren näher erläutert.

Es zeigen
- Fig. 1: einen Axialschnitt durch eine Verbindungsvorrichtung gemäß einem ersten Ausführungsbeispiel mit einem um einen Innenring umgestülpten flexiblen Gebinde, bereitstehend für ein Einklemmen in einen Außenring zum Erreichen einer Schnappposition,
- Fig. 2: einen Axialschnitt durch die Verbindungsvorrichtung aus Fig. 1 in einer Schnappposition,
- Fig. 3: einen Axialschnitt durch eine Verbindungsvorrichtung gemäß einem zweiten Ausführungsbeispiel mit einem um einen Innenring umgestülpten flexiblen Gebinde, bereitstehend für das Einklemmen in einen Außenring zum Erreichen der Schnappposition,
- Fig. 4: einen Axialschnitt durch die Verbindungsvorrichtung aus Fig. 3 in einer Schnappposition,
- Fig. 5: einen Axialschnitt durch eine Verbindungsvorrichtung gemäß einem dritten Ausführungsbeispiel mit einem um einen Innenring umgestülpten flexiblen Gebinde in der Schnappposition, wobei eine Verbindung zu einem Anschlussring besteht, und
- Fig. 6: einen Axialschnitt durch die Verbindungsvorrichtung aus Fig. 4, wobei eine Verbindung zu einem weiteren Anschlussring besteht.

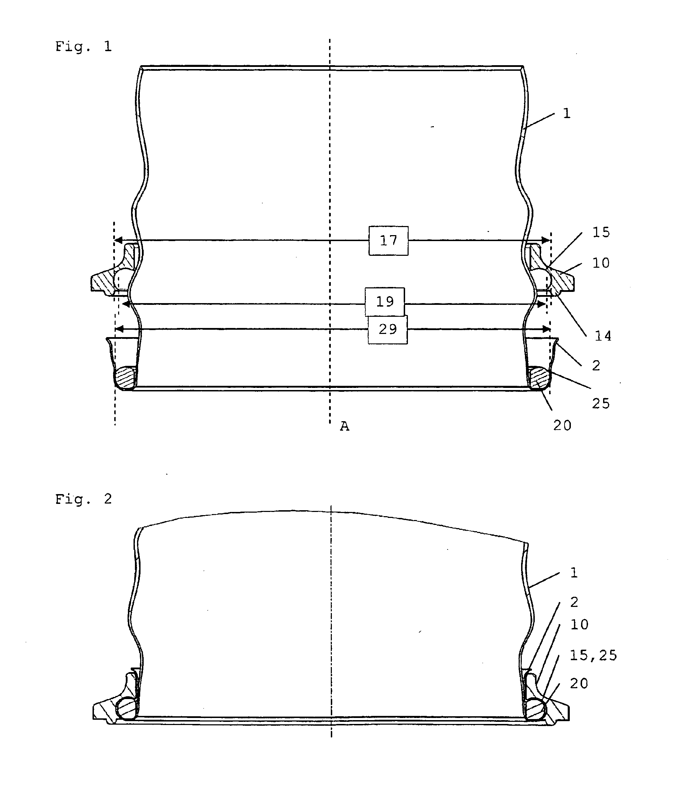

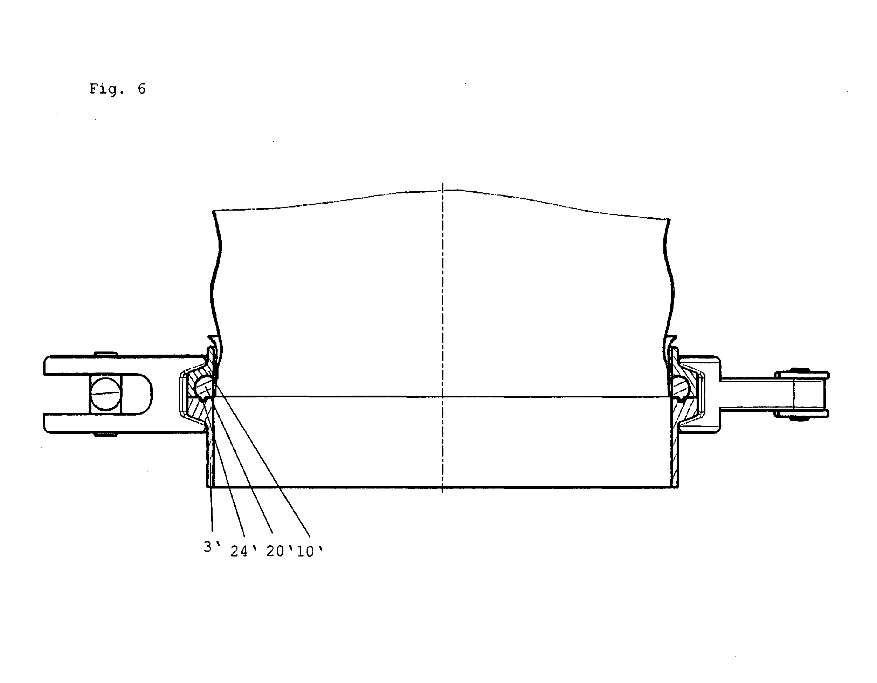

Die Figuren 1 bis 6 verdeutlichen erfindungsgemäße Verbindungsvorrichtungen in 3 Ausführungsbeispielen.

Generell verbindet die Verbindungsvorrichtung ein flexibles Gebindes 1 mit einem Flansch oder einem Anschlussring 3. Die Verbindungsvorrichtung weist als radial äußeres Element einen stets radial außerhalb des Gebindes 1 angeordneten Außenring 10, 10', 10'' auf. Der Außenring 10, 10', 10'' weist radial innen dem Gebinde 1 zugewandt eine Innenfläche auf. In axialer Richtung A dem Flansch oder dem Anschlussring 3 zugewandt weist der Außenring 10, 10', 10'' eine Anschlussseite 18 auf.

Als radial inneres Element weist die Verbindungsvorrichtung einen Innenring 20, 20', 20'' auf, der radial außen eine Außenfläche hat, um welche ein Endabschnitt 2 des Gebindes 1 umstülpbar ist. In den Darstellungen der Figuren 1 bis 6 ist das Gebinde 1 um den jeweiligen Innenring 20, 20', 20'' von innen nach außen umgestülpt dargestellt.

Die Außenfläche und die Innenfläche sind kongruent zueinander ausgebildet. Der Endabschnitt 2 ist gemäß den Figuren 2 und 4 bis 6 zwischen dem Außenring 10, 10', 10'' und dem Innenring 20, 20', 20'' eingeklemmt, nachdem der Innenring 20, 20', 20'' in den Außenring 10, 10', 10'' eingeschnappt ist. Unter Einschnappen wird hierbei das Einbringen des Innenrings in den Außenring verstanden, wobei der Innenring sich selbst aufgrund seiner Flexibilität in dem Außenring sichert. Dazu ist eine erfindungsgemäße Aufnahmenut 15, 15', 15'' für den Innenring in dem Außenring ausgebildet.

Der Innenring 20, 20', 20'' wird von der Anschlussseite 18 her in den Außenring 10, 10', 10'' eingesetzt. Ist er eingesetzt, stützt er sich erstens der Anschlussseite 18 abgewandt in der Aufnahmenut 15, 15', 15'' ab. Die radial innen vollständig umlaufende, nach radial innen offene Aufnahmenut 15, 15', 15'' mit einem runden Querschnitt stützt den Innenring 20, 20', 20'' zweitens der Anschlussseite 18 zugewandt ab.

Der Innenring 20, 20', 20'' ist einteilig und in einem Bereich der Außenfläche mit einem runden Querschnitt ausgebildet. Er besteht aus einem einzigen derart flexiblen Material, dass er zum Erreichen der Verbindungsposition in die Aufnahmenut 15, 15', 15" einschnappen kann, nachdem er über einen engeren Innendurchmesser 19 des Außenrings 10, 10', 10'' auf der Anschlussseite 18 verbracht worden ist.

Dem Außenring 10, 10', 10'' zugewandt weist der Innenring 20, 20', 20'' eine runde Klemmfläche 25 auf, die das Gebinde 1 umweltdicht in die Aufnahmenut 15, 15', 15'' drückt. Je nach Wandstärke des Gebindes 1 wird ein Übermaß des Innenrings 10, 10', 10'' gegenüber der Aufnahmenut 15, 15', 15'' ausgeführt oder nicht. Das Übermaß bemisst sich in der Differenz zwischen einem radial äußersten Außendurchmesser 29 der Klemmfläche 25 und einem radial äußersten Innendurchmesser 17 der Aufnahmenut 15, 15', 15''. So kann es für entsprechende Gebinde jeweils einen passenden Innenring geben.

Das erste Ausführungsbeispiel der Figuren 1 und 2 weist einen radial innen abgeflachten Innenring 20 mit ansonsten kreisrundem Querschnitt und einen Außenring 10 mit einer Dichtlippe 14 auf. Die Dichtlippe 14 ist dem Flansch bzw. dem Anschlussring zugewandt umlaufend auf dem Außenring 10 angeformt.

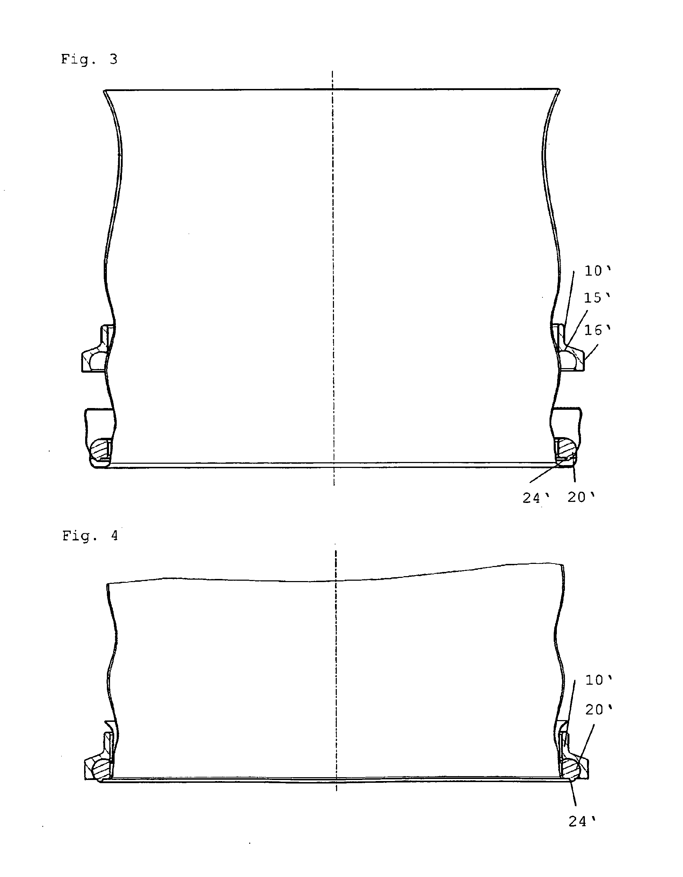

Das zweite Ausführungsbeispiel der Figuren 3, 4 und 6 weist einen radial innen abgeflachten Innenring 20' auf, der dem Anschlussring 3' zugewandt eine als umlaufende Erhebung ausgebildete Nase 24' hat. Die Nase 24' dichtet den Innenring in der Verbindungsposition mit dem Anschlussring 3' gegen das um den Innenring 20' umgeschlagene Gebinde 1 und den gegenüberliegend angeklemmten Anschlussring 3' ab.

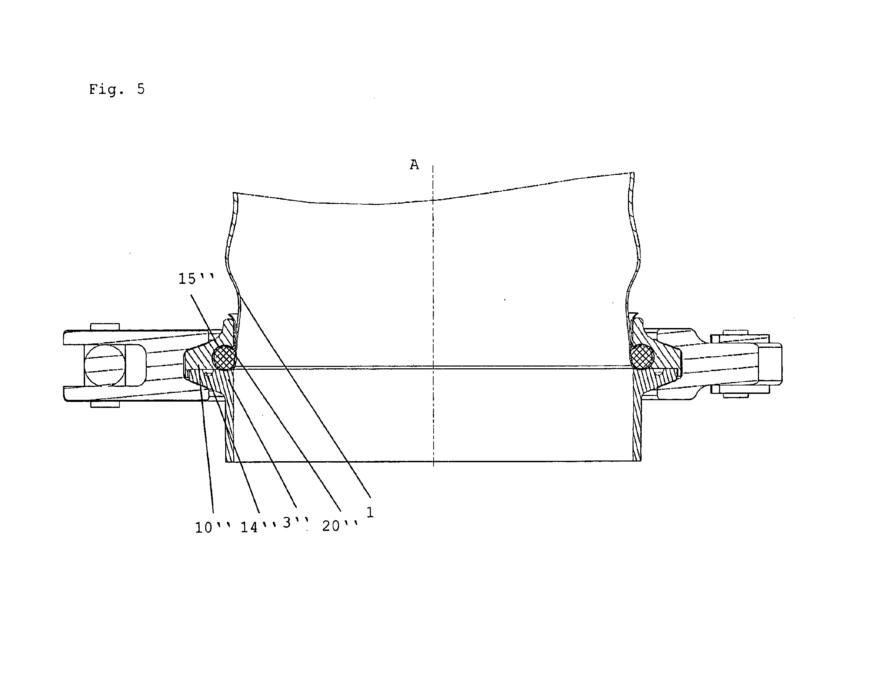

Das dritte Ausführungsbeispiel der Figur 5 weist einen sehr einfach ausgeführten Innenring 20'' mit vollständig kreisrundem Querschnitt auf. Der Außenring 10'' trägt dem Anschlussring 3'' zugewandt umlaufend eine Dichtlippe 14''.

Die verschiedenen Ausführungsbeispiele zeigen unterschiedliche Außenringe 10, 10', 10'', die einteilig ausgebildet sein können. Die gezeigten Dichtlippen 14, 14'' können daran angeformt sein oder als separater Dichtring in eine umlaufende Nut, die in axialer Richtung dem Anschlussring 3'' zugewandt offen ist, auf der Anschlussseite 18 in den Außenring 10, 10'' eingelegt werden.

### Bezugszeichenliste

- 1: Gebinde
- 2: Endabschnitt
- 3', 3'': Anschlussring

- 10, 10', 10'': Außenring
- 14, 14": Dichtlippe
- 15, 15', 15'': Aufnahmenut
- 17: radial äußerster Innendurchmesser
- 18: Anschlussseite
- 19: Innendurchmesser

- 20, 20', 20'': Innenring
- 24': Nase
- 25: Klemmfläche
- 29: Außendurchmesser

- A: axiale Richtung

## Patentansprüche

1. Verbindungsvorrichtung mit zumindest einem flexiblen Gebinde (1) zum Verbinden des Gebindes (1) mit einem Flansch oder einem Anschlussring (3), mit
1.1 einem Außenring (10, 10', 10''), der radial innen eine Innenfläche und dem Flansch oder dem Anschlussring (3) zugewandt eine Anschlussseite (18) aufweist, und
1.2 einem Innenring (20, 20', 20''), der radial außen eine Außenfläche aufweist, um welche ein Endabschnitt (2) des Gebindes (1) umgestülpt ist,
1.3 wobei die Außenfläche und die Innenfläche wenigstens teilweise kongruent zueinander ausgebildet sind, sodass der Endabschnitt (2) zum Erreichen einer Verbindungsposition zwischen dem Außenring (10, 10', 10'') und dem Innenring (20, 20', 20'') einklemmbar ist,
1.4 und wobei der Innenring (20, 20', 20'') von der Anschlussseite (18) her in den Außenring (10, 10', 10'') einsetzbar und der Innenring (20, 20', 20'') in der Verbindungsposition der Anschlussseite (18) abgewandt in dem Außenring (10, 10', 10'') abgestützt ist,
wobei der Außenring (10, 10', 10'') radial innen eine vollständig umlaufende, nach radial innen offene Aufnahmenut (15) mit einem runden Querschnitt aufweist,
der Innenring (20) einteilig und in einem Bereich der Außenfläche mit einem runden Querschnitt ausgebildet ist und der Innenring (20) aus einem einzigen derart flexiblen Material besteht, dass es den Innenring (20) zum Erreichen der Verbindungsposition in die Aufnahmenut (15) einschnappen lässt.

2. Verbindungsvorrichtung nach Anspruch 1,
**dadurch gekennzeichnet, dass** der Außenring (10) aus einem einzigen Teil besteht.

3. Verbindungsvorrichtung nach einem der Ansprüche 1 oder 2,
**dadurch gekennzeichnet, dass** der Innenring (20) in einer Schnappposition in axialer Richtung (A) beidseitig in der Aufnahmenut (15) abgestützt ist.

4. Verbindungsvorrichtung nach einem der vorangehenden Ansprüche, **dadurch gekennzeichnet, dass** der Außenring (10) auf der Anschlussseite (18) mit einem Innendurchmesser (19) ausgebildet ist, der kleiner ist als ein radial äußerster Außendurchmesser (29) des Innenrings (20).

5. Verbindungsvorrichtung nach einem der vorangehenden Ansprüche, **dadurch gekennzeichnet, dass** die Aufnahmenut (25) derart ausgebildet ist, dass sie bei Betrachtung gemäß einem Ziffernblatt einer Uhr den runden Querschnitts des Innenrings (20) in der Schnappposition von etwa 7 bis 1 Uhr umgreift.

6. Verbindungsvorrichtung nach einem der vorangehenden Ansprüche, **dadurch gekennzeichnet, dass** der Außenring (10) und/oder der Innenring (20) auf der jeweiligen Anschlussseite (18) eine umlaufende Dichtung (14, 14'', 24') aufweist.

7. Verbindungsvorrichtung nach einem der Ansprüche 1 bis 5,
**dadurch gekennzeichnet, dass** der Außenring (10) und/oder der Innenring (20) in axialer Richtung (A) dem Flansch oder dem Anschlussring (3) zugewandt eine umlaufende Nut zur Aufnahme einer Dichtung aufweist.

8. Verbindungsvorrichtung nach einem der vorangehenden Ansprüche,
**dadurch gekennzeichnet, dass** ein radial äußerster Außendurchmesser (29) des Innenrings (20) größer ist als ein radial äußerster Innendurchmesser (17) des Außenrings (10).

## Claims

1. A connecting device that has at least one flexible container (1) for connecting the container (1) to a flange or a connecting ring (3), comprising
1.1 an outer ring (10, 10', 10"), which has an inner surface radially on the inside, and a connection side (18) facing the flange or the connecting ring (3), and
1.2 an inner ring (20, 20', 20") which has an outer surface radially on the outside, about which an end section (2) of the container (1) is turned over,
1.3 the outer surface and the inner surface being formed at least partially congruent with one another so that the end section (2) can be clamped between the outer ring (10, 10', 10") and the inner ring (20, 20', 20") in order to bring about a connected position,
1.4 and the inner ring (20, 20', 20") being able to be inserted into the outer ring (10, 10', 10") from the connection side (18), and in the connected position said inner ring (20, 20', 20") being supported in the outer ring (10, 10', 10") facing away from the connection side (18),
the outer ring (10, 10', 10") having radially on the inside a completely circumferential, radially inwardly open receptacle groove (15) with a round cross section,
the inner ring (20) being formed in one part and with a round cross section in one area of the outer surface, and the inner ring (20) being composed of a single flexible material such that it allows the inner ring (20) to click into the receptacle groove (15) in order to bring about the connected position.

2. The connecting device according to Claim 1, **characterised in that** the outer ring (10) is composed of a single part.

3. The connecting device according to either of Claims 1 or 2, **characterised in that** in a clicked position the inner ring (20) is supported on both sides in the receptacle groove (15) in the axial direction (A).

4. The connecting device according to any of the preceding claims, **characterised in that** the outer ring (10) is formed on the connection side (18) with an inner diameter (19) which is smaller than a radially outermost outer diameter (29) of the inner ring (20).

5. The connecting device according to any of the preceding claims, **characterised in that** the receptacle groove (25) is formed in such a way that, when considered in accordance with a clock face, said receptacle groove engages around the round cross section of the inner ring (20) from approximately 7 o'clock to 1 o'clock in the clicked position.

6. The connecting device according to any of the preceding claims, **characterised in that** the outer ring (10) and/or the inner ring (20) have/has a circumferential seal (14, 14", 24') on the respective connection side (18).

7. The connecting device according to any of Claims 1 to 5, **characterised in that** the outer ring (10) and/or the inner ring (20) has, facing the flange or the connecting ring (3) in the axial direction (A), a circumferential groove for receiving a seal.

8. The connecting device according to any of the preceding claims, **characterised in that** a radially outermost outer diameter (29) of the inner ring (20) is larger than a radially outermost inner diameter (17) of the outer ring (10).

## Revendications

1. Dispositif de liaison, comprenant au moins un récipient (1) souple pour relier le récipient (1) à une bride ou à une bague (3) de raccordement, comprenant
1.1 une bague (10, 10', 10'') extérieure, qui a, à l'intérieur radialement, une surface intérieure, et, tourné vers la bride ou vers la bague de raccordement, un côté (18) de raccordement et
1.2 une bague (20, 20', 20'') intérieure, qui a, à l'extérieur radialement, une surface extérieure, autour de laquelle est retroussée une partie (2) d'extrémité du récipient (1),
1.3 dans lequel la surface extérieure et la surface intérieure sont constituées, au moins en partie, de manière congruente, au moins en partie, de manière à ce que la partie (2) d'extrémité puisse être serrée pour atteindre une position de liaison entre la bague (10, 10', 10'') extérieure et la bague (20, 20', 20'') intérieure,
1.4 et dans lequel la bague (20, 20', 20'') intérieure peut être insérée par le côté (18) de raccordement dans la bague (10, 10', 10'') extérieure et la bague (20, 20',, 20'') intérieure est appuyée en la position de liaison, en étant éloignée du côté (18) de raccordement, dans la bague (10, 10', 10'') extérieure,
dans lequel la bague (10, 10', 10'') extérieure a, à l'intérieur radialement, une rainure (15) de réception de section transversale circulaire ouverte vers l'intérieur radialement et faisant complètement le tour,
la bague (20) intérieure est constituée d'une pièce et dans une partie de la surface extérieure ayant une section transversale circulaire et la bague (20) intérieure est en un matériau souple unique, de manière à pouvoir encliqueter la bague (20) intérieure dans la rainure (15) de réception pour atteindre la position de liaison.

2. Dispositif de liaison suivant la revendication 1, **caractérisé en ce que** la bague (10) extérieure est constituée d'une pièce unique.

3. Dispositif de liaison suivant l'une des revendications 1 ou 2, **caractérisé en ce que** la bague (20) intérieure est appuyée dans une position d'encliquetage dans la direction (A) axiale des deux côtés dans la rainure (15) de réception.

4. Dispositif de liaison suivant l'une des revendications précédentes,
**caractérisé en ce que** la bague (10) extérieure est formée du côté (18) de raccordement en ayant un diamètre (19) intérieur, qui est plus petit qu'un diamètre (29) extérieur le plus à l'extérieur radialement de la bague (20) intérieure.

5. Dispositif de liaison suivant l'une des revendications précédentes,
**caractérisé en ce que** la rainure (25) de réception est constituée de manière à ce qu'elle entoure, en considérant un cadran d'une montre, la section transversale de la bague (20) intérieure dans la position d'encliquetage d'environ 7 à 1 heure.

6. Dispositif de liaison suivant l'une des revendications précédentes,
**caractérisé en ce que** la bague (10) extérieure et/ou la bague (20) intérieure a, du côté (18) de raccordement respectif, une garniture (14, 14'', 24') d'étanchéité faisant le tour.

7. Dispositif de liaison suivant l'une des revendications 1 à 5,
**caractérisé en ce que** la bague (10) extérieure et/ou la bague (20) intérieure a, dans la direction (A) axiale tournée vers la bride ou vers la bague de raccordement, une rainure faisant le tour de réception d'une garniture d'étanchéité.

8. Dispositif de liaison suivant l'une des revendications précédentes,
**caractérisé en ce qu'**un diamètre (29) extérieur le plus extérieur de la bague (20) intérieure est plus grand q'un diamètre (17) intérieur le plus extérieur radialement de la bague (10) extérieure.
